# EUROPÄISCHE PATENTSCHRIFT

(11) **EP 0 333 069 B1**
(45) Veröffentlichungstag und Bekanntmachung des Hinweises auf die Patenterteilung: **24.05.1995**
(21) Anmeldenummer: 89104295.4
(22) Anmeldetag: 10.03.1989
(51) Int. Cl.: H04N 5/14

(54) **Vorrichtung und Verfahren zur Bewegungsdetektion in einem Videosignal**
Device and method for discriminating movement in a video signal
Dispositif et méthode de détection de mouvement dans un signal vidéo

(30) Priorität: 18.03.1988 DE 3809249
(43) Veröffentlichungstag der Anmeldung: 20.09.1989
(73) Patentinhaber: Deutsche Thomson-Brandt GmbH, 78003 Villingen-Schwenningen (DE)
(72) Erfinder: Hartnack, Wolfgang, Dipl.-Ing., D-3005 Hemmingen 1 (DE)

(56) Entgegenhaltungen:
- US-A- 4 090 221
- US-A- 4 661 853
- US-A- 4 667 233
- H.Schönfelder: "Digitale Filter der Videotechnik" Seiten 110-113, 230-231 und 276-277.

## Beschreibung

Die Erfindung betrifft einen Bewegungsdetektor und ein Verfahren zur Ermittlung von dynamischen Bildanteilen eines Videosignals.

Zur Ermittlung von dynamischen Bildanteilen sind Bewegungsdetektoren bekannt, bei denen die vektorielle Bewegungsrichtung sowie deren Geschwindigkeit eines Bildpunktes ermittelt werden. Dazu wird um den Bildpunkt eine Matrix von z.B. 3x3 Bildpunkten gelegt. Diese 3x3 Matrix wird vergleichen mit einer entsprechenden Matrix des vorherigen Bildes. Zur Ermittlung einer Bewegung werden alle Bildpunkte einer z.B. 15x15 Matrix im Umfeld des Bildpunktes auf ihre Bewegungsrichtung und Geschwindigkeit untersucht, um zu ermitteln, in welchem Bereich die Korrelation der Matrix ein Maximum aufweist. Auf diese Weise wird sowohl eine Bewegungsrichtung des Bildpunktes ermittelt als auch die Geschwindigkeit, mit der die Bildbewegung stattfindet. Es wird also die Bewegungsrichtung von Blöcken festgestellt. Die ermittelten Werte dienen als Zusatzinformation zur Ausstrahlung eines HD/TV-Signals. Im Sender werden von den übermittelten Bewegungsrichtungen und Geschwindigkeiten z.B. 16 Vektoren pro Bild bzw. Halbbild ausgewählt. Pro Block werden im Empfänger jedoch nur vier Bewegungsrichtungen und Geschwindigkeiten zugelassen. Das bedeutet, daß in einem Block, der z.B. 32x32 Bildpunkte aufweist, nur vier Bewegungsrichtungen und Geschwindigkeiten zugelassen werden. Dies ist gegenüber der sehr großen Anzahl von Bewegungsrichtungen und Geschwindigkeiten eine sehr starke Einschränkung, die z.B. bei einer Zoomaufnahme, bei der jeder Bildpunkt eine andere Richtung und Geschwindigkeit aufweist, zu einer nicht akzeptablen Wiedergabe führen würde. In einem solchen Fall wird die Zusatzinformation vom Empfänger abgeschaltet. Es wird umgeschaltet auf eine Interpolation, die z.B. aus der Mittelung von zwei Zeilen zur Bildung einer dazwischen liegenden bestehen kann. Für einen solchen bekannten Bewegungsdetektor ist ein hoher Schaltungsaufwand sowie eine schnelle Signalverarbeitung erforderlich.
In US-A-4 667 233 wird für zweidimensionale Bildpunkt-Blöcke eine Bewegungs-Detektion durchgeführt. Dafür ist eine umfangreiche Hardware und eine schnelle Signalverarbeitung erforderlich. Da nur für ganze Blöcke Bewegung detektiert wird, kann die Bewegung von kleinen Objekten nicht erfaßt werden.

Aufgabe der Erfindung ist es, einen Bewegungsdetektor anzugeben, der mit einem möglichst geringen Schaltungsaufwand sowie einer geringen Signalverarbeitungsgeschwindigkeit zuverlässig bildpunktweise Bewegung detektiert, wobei die Hardware und deren Steuerung für eine von dem Ergebnis der Bewegungsdetektion abhängige vertikale Filterung mit ausgenutzt werden kann. Diese Aufgabe wird durch die im Patentanspruch 4 angegebenen Merkmale gelöst. Vorteilhafte Weiterbildungen der Erfindung sind in den abhängigen Ansprüchen beschrieben. Das entsprechende Verfahren ist im Anspruch 1 angegeben.

Der erfindungsgemäße Bewegungsdetektor verarbeitet parallel, jeweils um einen Takt verschoben, die Werte vertikal übereinanderliegender Bildpunkte. Es werden entsprechend der Anzahl der für die Bewegungsdetektion herangezogenen Bildpunkte Bewegungsdetektoren benötigt. Für die Bewegungsdetektion eines Bildpunktes werden die Absolutwerte der Differenzen vertikal benachbarter gewichteter Bildpunkte aus zwei zeitlich folgenden Vollbildern ermittelt. Diese Absolutwerte werden aufsummiert und die Summe aller Werte wird gewichtet. Ergibt sich, daß die Summe einen vorbestimmten Schwellwert überschreitet, wird dieser Bildpunkt als bewegter Bildpunkt detektiert.
Zur verbesserten Gewichtung dieser Information, im Verhältnis zu den benachbarten, in horizontaler Richtung liegenden Bildpunkten, werden die Ergebnisse der um einen Takt verschobenen und zwischengespeicherten Bewegungsdetektoren-Ausgangssignale untersucht und im Falle, daß eine Anzahl der Bewegungsdetektoren Bewegung detektiert hat, wird der Bildpunkt als bewegter Bildpunkt behandelt.
Vorteilhaft ergibt sich, daß bei der erfindungsgemäßen Ermittlung der Bewegung eines Bildpunktes Rauschen, wie es z.B. bei großflächigen Bildanteilen vorkommen kann, auch dann nicht als Bewegung detektiert wird, wenn für einen der Bildpunkte vom Bewegungsdetektor ein extrem hoher Wert ermittelt wird, während alle anderen Bildpunkte unterhalb der Bewegungsschwellen liegen. Denn für jeden Bildpunkt wird ein logischer Wert ermittelt, der eine Aussage angibt, ob für diesen Bildpunkt Bewegung detektiert wurde.

Ein weiterer Vorteil liegt in der Signalverarbeitungsgeschwindigkeit. Da entsprechend der Anzahl der für die Bewegungsdetektion herangezogenen Bildpunkte Bewegungsdetektoren vorhanden sind, wird je Verarbeitungstakt ein Bewegungs-Detektor-Ausgangssignal für einen Bildpunkt ermittelt. Somit ist keine erhöhte Verarbeitungsgeschwindigkeit erforderlich. Der Schaltungsaufwand ist zudem gering.

Nachstehend wird ein Ausführungsbeispiel an Hand der Zeichnungen erläutert:
- Fig. 1: Bewegungsdetektor
- Fig. 2: Mittelung von Bewegungsdetektorsignalen.

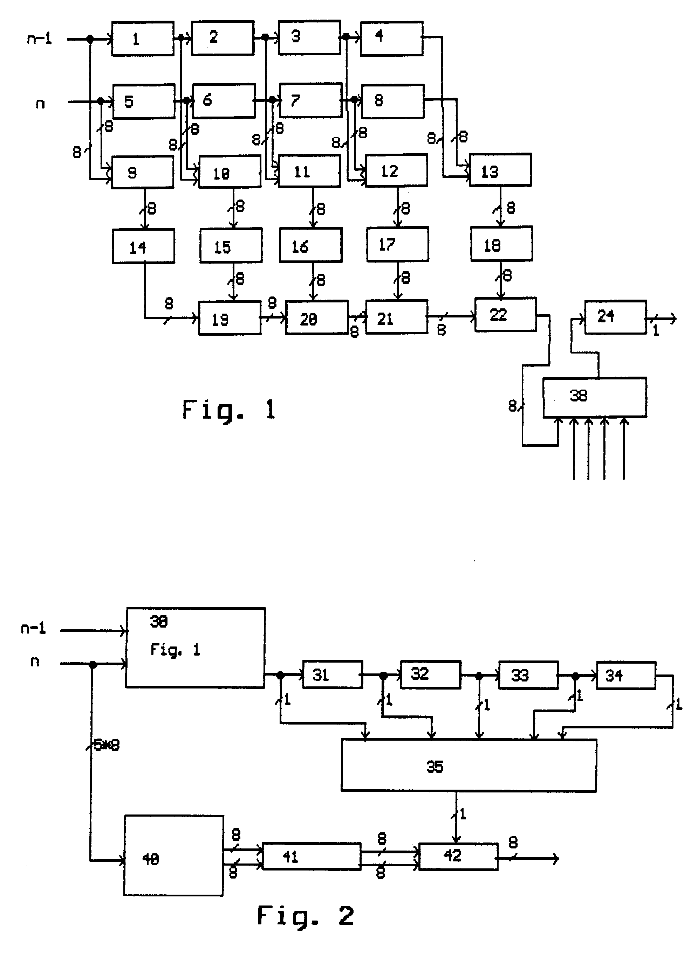

Fig. 1 zeigt einen erfindungsgemäßen Bewegungsdetektor. Am Eingang einer Verzögerungskette 1-4 liegt das zu untersuchende Signal an. Dieses Signal kann sowohl ein Luminanz- als auch ein Chrominanzsignal sein. Dieses Signal repräsentiert die Bildinhalte des vorherigen Bildes n-1. Am Eingang einer zweiten Verzögerungskette 5-8 liegt ein Signal des aktuellen Bildes n an. Jeweils die Eingangssignale der Verzögerungskette 1-4, 5-8, als auch die Ausgangssignale dieser Verzögerungsketten 1-4, 5-8 werden einem Subtrahierer 9-13 zugeführt. Die Ausgänge der Subtrahierer 9-13 werden Absolutwertebildnern 14-18 zugeführt, wobei jeweils die aufeinanderfolgenden Ausgänge der Absolutwertbildner 14-18 den Addierern 19-22 zugeführt werden. Am Ausgang des Addierers 22 liegt dann die Summe sämtlicher Absolutwerte an. Dieser Ausgang 22 führt auf einen Umschalter 38, welcher die Ausgänge von parallel liegenden Bewegungsdetektoren gleichen Aufbaus zusammenfaßt und je nach aktuellem Berechungsstand auf einen Vergleicher 24 schaltet. Dieser Vergleicher 24 liefert ein Signal bezüglich der Bewegung des Bildpunktes, wenn die Summe der Absolutwerte vom Ausgang des Addierers 22 einen Schwellwert überschreitet.

Fig. 2 zeigt eine Schaltung zur Zusammenfassung von Bewegungsdetektorsignalen. Die Information der Bildinhalte des aktuellen Bildes sowie des vorherigen Bildes werden einem Bewegungsdetektor 30 zugeführt, dessen Aufbau in Fig. 1 beschrieben ist. Es sind insgesamt fünf Bewegungsdetektoren parallel geschaltet vorhanden. Die Information über das aktuelle Bild wird gleichzeitig vertikalen Filtern 40 zugeführt, die ebenfalls z.B. 5x parallel vorhanden sind. Der Ausgang des Bewegungsdetektors 30 führt auf eine Verzögerungskette 31-34. Jeder Eingang der Verzögerungsglieder 31-34 und der Ausgang des Verzögerungsgliedes 34 ist mit einem Eingang des Addierers und Vergleichers 35 verbunden. Der Ausgang des Addierers und Vergleichers 35 führt auf einen Eingang des Umschalters 42. Die vertikalen Filter 40 sind über eine Verzögerungsschaltung 41 mit Eingängen des Umschalters 42 verbunden. Am Ausgang des Umschalters 42 ist das gefilterte Signal des aktuellen Vollbildes n abgreifbar. In Abhängigkeit vom Ergebnis, ob der Addierer und Vergleicher 35 für den aktuellen Bildpunkt eine statische oder eine dynamische Information ermittelt hat, werden die Bildpunkte auf den Ausgang des Umschalters 42 umgeschaltet, die eine Filterung für den statischen bzw. eine Filterung für den dynamischen Fall durchlaufen haben.

Mit dieser Art der Zusammenfassung von mehreren Bewegungsdetektorsignalen wird vermieden, daß das Umfeld des zu untersuchenden Bildpunktes von z.B. 5x5 Bildpunkten separat untersucht werden muß, d.h., es wird vermieden, daß 25 Bildpunkte subtrahiert, der Betrag gebildet, und die Summen addiert werden. Das gleiche Ergebnis wird dadurch erzielt, daß 5 Bildpunkte, die vertikal übereinander liegen, zur Ermittlung der Bewegung des mittleren Bildpunktes auf ihre Bewegung hin untersucht werden, und daß die Endergebnisse von fünf nebeneinanderliegenden Bewegungsdetektorsignalen auf Bewegung hin untersucht werden. Es werden also nur fünf Bildpunkte verarbeitet und das Ergebnis von fünf Bewegungsdetektorsignalen gespeichert. Die Speicherung geschieht dadurch, daß vier Verzögerungsleitungen 31-34 verwendet werden, so daß gleichzeitig das Ergebnis von fünf Bewegungsdetektoren zur Verfügung steht.

Da nicht der Mittelwert ermittelt werden muß, sondern nur eine Information ob eine Bewegung vorhanden ist oder nicht, reicht es aus, eine binäre Information Bewegung vorhanden/keine Bewegung zu speichern. Diese binäre Information wird im Addierer und Vergleicher 35 aufsummiert, und im Falle, daß die Summe ≦ 2 ist, wird für den aktuellen Bildpunkt, der im Ausgang des Verzögerungsgliedes 41 anliegt, "keine Bewegung" detektiert. Ist die Summe > 2, bedeutet dies, das es sich bei diesem Bildpunkt um einen bewegten Bildpunkt handelt. Vorteilhaft ergibt sich daraus, daß z.B. bei einer Schwelle von 30, über der Bewegung für einen Bildpunkt detektiert würde, nicht die absoluten Werte, sondern die binäre Information ausgewertet wird. Sollten z.B. vier Bildpunkte einen Wert unterhalb der Schwelle aufweisen, durch Störung jedoch einen Punkt weit oberhalb der Schwelle liegen, majoresiert dieser Wert nicht die übrigen vier Bildpunkte. Er stellt nur eine gleichwertige Information dar. In diesem Falle würde der Bildpunkt als statischer Bildpunkt detektiert.

## Patentansprüche

1. Verfahren zur Detektion von bewegten Bildanteilen eines Videosignals, wobei jeweils die Absolutwerte (14-19) von Differenzwerten (9-13) zwischen räumlich sich entsprechenden Bildpunkten benachbarter Vollbilder (n, n-1) aufsummiert (19-22) und mit einem Schwellwert verglichen (24) werden, bei welchem :
- für jeden Bildpunkt wird ein Detektions-Ergebnis ermittelt;
- die Bewegungsdetektion erfolgt bildpunktweise fortlaufend in Zeilen-Richtung;
- zur Bildung der Differenzwerte werden nur das aktuelle Bildpunkt-Paar und vertikal oberhalb und unterhalb dieses Bildpunkt-Paars liegende, benachbarte Bildpunkt-Paare herangezogen;
- das aus diesen vertikal übereinanderliegenden Bildpunkt-Paaren gewonnene, Zwei-Zustands-Vergleichs-Ergebnis wird mit den Zwei-Zustands-Vergleichs-Ergebnissen für die zwei jeweils horizontal vor und hinter dem aktuellen Bildpunkt liegenden Bildpunkte zusammengefaßt (35);
- falls bei dieser Zusammenfassung mehr als zwei dieser fünf Vergleichs-Ergebnisse über dem Schwellwert liegen, wird der aktuelle Bildpunkt als bewegt angesehen.

2. Verfahren nach Anspruch 1, **dadurch gekennzeichnet**, daß Werte der vertikal übereinanderliegenden Bildpunkte des aktuellen Bilds (n) Eingangswerte eines Vertikalfilters (40) mit einem umschalter (42) sind, die jeweils für den aktuellen Bildpunkt einen gefilterten Ausgangs-Bildpunktwert entsprechend dem Ergebnis (42) der Bewegungs-Detektion erzeugen.

3. Verfahren nach Anspruch 1 oder 2, **dadurch gekennzeichnet**, daß außer dem aktuellen Bildpunkt-Paar jeweils zwei vertikal über und unter dem aktuellen Bildpunkt-Paar liegende, benachbarte Bildpunkt-Paare für die Differenz-Bildung verwendet werden.

4. Bewegungsdetektor zur Ermittlung von bewegten Bildanteilen eines Videosignals, enthaltend :
- eine erste Verzögerungskette (5-8) für Bildpunktwerte eines aktuellen Bildes (n);
- eine zweite Verzögerungskette (1-4) für Bildpunktwerte eines vorhergehenden Bildes (n-1);
- an entsprechende Abgriffe der Verzögerungsketten angeschlossene Subtrahierer (9-13) zur Bildung von Differenzwerten zwischen räumlich sich entsprechenden Bildpunkten aus diesen beiden Bildern (n, n-1), und zwar nur für das aktuelle Bildpunkt-Paar und vertikal oberhalb und unterhalb dieses Bildpunkt-Paars liegende, benachbarte Bildpunkt-Paare;
- einen an den Ausgang jedes Subtrahierers angeschlossenen Absolutwert-Bildner (14-18);
- an die Ausgänge der Absolutwert-Bildner angeschlossene Addierer (19-22), die jeweils die Summe der Absolutwerte bilden;
- einen nachfolgenden, ersten Vergleicher (24), in dem diese Summe mit einem Schwellwert verglichen wird und der ein Zwei-Zustands-Vergleichs-Ergebnis liefert;
- eine nachfolgende, dritte Verzögerungskette (31-34) für diese Zwei-Zustands-Vergleichs-Ergebnisse;
- einen an entsprechende Abgriffe dieser dritten Verzögerungskette angeschlossenen, zweiten Vergleicher (35), in dem jeweils fünf in Zeilen-Richtung bildpunktweise fortlaufende dieser Vergleichs-Ergebnisse zusammengefaßt werden, und zwar das Vergleichs-Ergebnis für den aktuellen Bildpunkt und diejenigen für die zwei jeweils horizontal vor und hinter dem aktuellen Bildpunkt liegenden Bildpunkte, wobei der aktuelle Bildpunkt als bewegt gilt, wenn mehr als zwei dieser fünf Vergleichs-Ergebnisse über dem Schwellwert liegen und für jeden Bildpunkt ein solches Detektions-Ergebnis ermittelt wird.

## Claims

1. A method of detecting moving picture components of a video signal, wherein the absolute values (14-19) of difference values (9-13) between spatially corresponding picture elements of adjacent frames (n, n-1) are in each case added (19-22) and compared with a threshold value (24), wherein:
- for each picture element a detection result is determined;
- the movement detection takes place continuously picture element by picture element in the line direction;
- only the current pair of picture elements and adjacent pairs of picture elements located vertically above and below this pair of picture elements are used to form the difference values;
- the two-state comparison result obtained from these pairs of picture elements located vertically one above another is combined with the two-state comparison results for the two picture elements in each case located horizontally before and after the current picture element (35);
- if, in the case of this combination, more than two of these five comparison results exceed the threshold value, the current picture element is considered to be moving.

2. A method as claimed in Claim 1, characterised in that values of the picture elements, located vertically above one another, of the current image (n) are input values of a vertical filter (40) with a change-over switch (42) which, in each case for the current picture element, produce a filtered output picture element value corresponding to the result (42) of the movement detection.

3. A method as claimed in Claim 1 or 2, characterised in that in addition to the current pair of picture elements, in each case two adjacent pairs of picture elements located vertically above and below the current pair of picture elements are used for the difference formation.

4. A movement detector for the determination of moving picture components of a video signal, comprising:
- a first delay chain (5-8) for picture element values of a current image (n);
- a second delay chain (1-4) for picture element values of a preceding image (n-1);
- subtracters (9-13), connected to corresponding tappings of the delay chains, for the formation of difference values between spatially corresponding picture elements of these two images (n, n-1), specifically only for the current pair of picture elements and adjacent pairs of picture elements located vertically above and below this pair of picture elements;
- an absolute value former (14-18) connected to the output of each subtracter;
- adders (19-22) which are connected to the outputs of the absolute value formers and which in each case form the sum of the absolute values;
- a following, first comparator (24) in which this sum is compared with a threshold value and which supplies a two-state comparison result;
- a following, third delay chain (31-41) for these two-state comparison results;
- a second comparator (35) which is connected to corresponding tappings of this third delay chain and in which in each case five of these comparison results, which follow one another continuously picture element by picture element in the line direction, are combined, specifically the comparison result for the current picture element and those comparison results for the picture elements located in each case horizontally before and after the current picture element, where the current picture element is considered to be moving when more than two of these five comparison results exceed the threshold value and such a detection result is determined for each picture element.

## Revendications

1. Procédé de détection de composantes d'image en mouvement d'un signal vidéo dans lequel les valeurs absolues (14 - 19) de valeurs différentielles (9 - 13) entre des points d'image, se correspondant spatialement, dans des images successives (n, n-1) sont totalisées (19 - 22) et comparées à une valeur de seuil (24) et dans lequel :
- un résultat de détection est déterminé pour chaque point d'image;
- la détection de mouvement est effectuée point d'image à point d'image dans le sens des lignes ;
- la formation des valeurs différentielles ne prend en compte que la paire de points d'image actuelle et les paires de points d'image adjacentes, situées verticalement au-dessus et en dessous de cette paire de points d'image;
- le résultat de comparaison de deux états obtenus de ces paires de points d'image superposées verticalement est assemblé avec les résultats de comparaison à deux états des points d'image situés horizontalement devant et derrière le point d'image actuel (35);
- si lors de cet assemblage de résultats, plus de deux de ces cinq résultats de comparaison se situent au-dessus de la valeur de seuil, le point d'image actuel est considéré comme mobile.

2. Procédé selon la revendication 1, **caractérisé par le fait** que des valeurs des points d'image, superposés verticalement, de l'image actuelle (n) sont des valeurs d'entrée d'un filtre vertical (40) avec un commutateur (42), qui génère une valeur de point d'image de sortie filtrée selon le résultat (42) de la détection de mouvement pour le point d'image actuel.

3. Procédé selon la revendication 1 ou 2, **caractérisé par le fait** que l'on utilise pour former la différence, outre la paire de points d'image actuelle, deux paires de points d'image adjacentes situées verticalement au-dessus et en dessous de la paire de points d'image actuelle.

4. Détecteur de mouvement pour la détermination de composantes d'image en mouvement d'un signal vidéo comprenant :
- une première chaîne d'éléments retardateurs (5 - 8) contenant des valeurs de points d'image d'une image actuelle (n);
- une seconde chaîne d'éléments retardateurs (1 - 4) contenant des valeurs de points d'image d'une image précédente (n-1);
- des soustracteurs (9 - 13) raccordés à des prises correspondantes des chaînes d'éléments retardateurs pour la formation de valeurs différentielles entre des points d'image, se correspondant spatialement, de ces deux images (n, n-1) et cela uniquement pour la paire de points d'image actuelle et les paires de points d'image adjacentes situées verticalement au-dessus et en dessous de cette paire de points d'image;
- un générateur de valeur absolue (14 - 18) raccordé à la sortie de chaque soustracteur;
- des additionneurs (19 - 22) raccordés aux sorties des générateurs de valeurs absolues qui forment la somme des valeurs absolues;
- un premier comparateur (24) consécutif dans lequel cette somme est comparée à une valeur de seuil et qui fournit un résultat de comparaison à deux états;
- une troisième chaîne d'éléments retardateurs (31 - 34) contenant ces résultats de comparaison à deux états;
- un second comparateur (35) raccordé à des sorties correspondantes de cette troisième chaîne d'éléments retardateurs dans lequel sont toujours réunis cinq de ces résultats de comparaison progressant point par point dans le sens des lignes, à savoir le résultat de comparaison pour le point d'image actuel et ceux des deux points d'image situés horizontalement devant et derrière le point d'image actuel; le point d'image actuel est considéré comme mobile si plus de deux de ces cinq résultats de comparaison sont supérieurs à la valeur de seuil et si un tel résultat de détection est déterminé pour chaque point d'image.
